# EUROPÄISCHE PATENTSCHRIFT

(11) **EP 1 701 561 B1**
(45) Veröffentlichungstag und Bekanntmachung des Hinweises auf die Patenterteilung: **02.04.2014**
(21) Anmeldenummer: 06003878.3
(22) Anmeldetag: 25.02.2006
(51) Int. Cl.: H04W 88/06

(54) **Hybrides Mobilfunksystem für Kommunikationsanwendungen**
Hybrid mobile communication system for communications applications
Système de communication mobile hybride pour des applications de communication

(30) Priorität: 07.03.2005 DE 102005010826
(43) Veröffentlichungstag der Anmeldung: 13.09.2006
(73) Patentinhaber: Vodafone Holding GmbH, 40213 Düsseldorf (DE)
(72) Erfinder: Holzer, Harald, 76698 Ubstadt-Weiher (DE); Groß-Weege, Jozef, 47918 Tönisvorst (DE); Schmitz, Peter, 64354 Reinheim (DE)
(74) Vertreter: Weisbrodt, Bernd

(56) Entgegenhaltungen:
- EP-A- 1 349 408
- WO-A-01/13666
- WO-A-03/049372
- US-A- 5 179 721
- BESCOM ELEKTRONIK GMBH: "TETRA, Digitaler mobilfunk, Eigenschaften und Merkmale" BESCOM ELEKTRONIK GMBH, [Online] 24. September 2002 (2002-09-24), Seiten 1-12, XP002386153 Gefunden im Internet: URL:http://blist.de/download/tetra-leistun gsmerkmale_v1-0-0.pdf> [gefunden am 2006-06-19]
- "Dolphin gibt Cleartone frei" PROFESSIONELLER MOBILFUNK E.V., [Online] August 2001 (2001-08), Seiten 1-4, XP002386154 Gefunden im Internet: URL:http://www.pmev.de/04_archiv/4-4_profi t/profit18.pdf> [gefunden am 2006-06-19]

## Beschreibung

Die vorliegende Erfindung betrifft ein Mobilfunksystem für Kommunikationsanwendungen mit einem digitalen Bündelfunknetz mit einer aus Funkzellen aufgebauten zellularen Netzstruktur, wenigstens einem mobilen Endgerät, welches zu Kommunikationszwecken in einem ersten Betriebsmodus in Funkzellen des Bündelfunknetzes betreibbar ist und/oder in einem zweiten Betriebsmodus unabhängig von Funkzellen des Bündelfunknetzes eine direkte Funkverbindung nutzend betreibbar ist, wobei mobile Endgeräte im ersten und/oder zweiten Betriebsmodus miteinander verbindbar sind, und wenigstens einem stationären Endgerät, welches zu Kommunikationszwecken in Funkzellen des Bündelfunknetzes betreibbar ist und über das Bündelfunknetz mit wenigstens einem im ersten Betriebsmodus betriebenen mobilen Endgerät verbindbar ist, wobei die Endgeräte ferner zu Kommunikationszwecken in Funkzellen eines öffentlichen zellularen Mobilfunknetzes betreibbar sind und über das Mobilfunknetz miteinander verbindbar sind. Ein derartiges Mobilfunksystem wird beispielsweise in "TETRA, Digitaler Mobilfunk, Eigenschaften und Merkmale (BESCOM ELEKTRONIK GMBH, 24. September 2002, Seiten 1 bis 12) oder in "Dolphin gibt Cleartone frei" (PROFESSIONELLER MOBILFUNK E.V., August 2001, Seiten 1 bis 4) offenbart.

Ferner betrifft die vorliegende Erfindung ein Endgerät für Kommunikationsanwendungen mit einer in einem digitalen Bündelfunknetz mit einer aus Funkzellen aufgebauten zellularen Netzstruktur betreibbaren Sende-/Empfangseinrichtung, welche zu Kommunikationszwecken in einem ersten Betriebsmodus einen Betrieb in Funkzellen des Bündelfunknetzes ermöglicht und/oder in einem zweiten Betriebsmodus einen Betrieb unabhängig von Funkzellen des Bündelfunknetzes mittels Nutzung einer direkten Funkverbindung ermöglicht, und einer Steuereinrichtung, welche eine Steuerung von Kommunikationsverbindungen der Sende-/Empfangseinrichtung im ersten und/oder zweiten Betriebsmodus ermöglicht.

Darüber hinaus betrifft die vorliegende Erfindung ein Verfahren für Kommunikationsanwendungen, welches zur Nutzung und/oder den Betrieb eines erfindungsgemäßen Mobilfunksystems und/oder eines erfindungsgemäßen Endgerätes ausgebildet ist.

Mobilfunksysteme, Endgeräte und Verfahren der eingangs genannten Art sind im Stand der Technik bekannt, beispielsweise aus der EP 0 675 660 B1 oder der EP 0 750 826 B1, insbesondere im Zusammenhang mit dem sogenannten TETRA-Standard (TErrestrial Trunked RAdio-Standard), der insbesondere für Kommunikationsanwendungen im Bereich von Behörden und/oder Organisationen mit Sicherheitsaufgaben, sogenannte BOS-Anwendungen, eingesetzt wird. BOS-Anwendungen sind seitens öffentlicher Organisationen als auch im Bereich privater Unternehmen gegeben, beispielsweise bei der Polizei, der Feuerwehr, im Rettungsdienst, im Katastrophenschutz, im Bereich des Werkschutzes von Unternehmen, Anwendungen im Bergbau, seitens Transportunternehmen und dergleichen. Dabei erlauben digitale Bündelfunknetzes und in diesen betreibbare Einrichtungen nutzende Systeme und Geräte eine sogenannte Gruppenbildung bzw. Gruppenkommunikation, die insbesondere für BOS-Anwendungen vorteilhaft und mitunter zwingend erforderlich ist.

Derartige insbesondere im Bereich von Behörden und/oder Organisationen mit Sicherheitsaufgaben eingesetzte Kommunikationsanwendungen stellen aus Sicherheitsgründen insbesondere an die Ort- und/oder Zeitwahrscheinlichkeit der Funkversorgung erhöhte Anforderungen, insbesondere da schon ein partieller Ausfall der Funkversorgung größere Schäden für Material und Mensch mit sich bringen kann.

Ferner sind im Stand der Technik öffentliche zellulare Mobilfunknetze, insbesondere gemäß dem GSM-Funknetzstandard (Global System for Mobile communications) und/oder dem sogenannten UMTS-Funknetzstandard (Universal Mobile Telecommunications Systems) bekannt, die im Gegensatz zu Bündelfunknetzen abgesehen von sogenannten technisch aufwendig machbaren und hinsichtlich der Teilnehmerzahl begrenzten Konferenzschaltungen eine sogenannte Punkt-zu-Punkt-Kommunikation ermöglichen. Bündelfunknetze sind insbesondere aufgrund der im Vergleich zu öffentlichen zellularen Mobilfunknetzen, insbesondere gemäß dem GSM- und/oder dem UMTS-Standard, relativ geringen Teilnehmerzahl potentieller Nutzer in der Regel nicht wirtschaftlich flächendeckend betreibbar.

Den insbesondere von BOS-Anwendungen gestellten Anforderungen, insbesondere hinsichtlich der Orts- und/oder Zeitwahrscheinlichkeit der Funkversorgung und/oder einer Gruppenbildung bzw. Gruppenkommunikation kommen die bisher bekannten öffentlichen zellularen Mobilfunknetze, insbesondere gemäß dem GSM- und/oder dem UMTS-Standard, nicht nach.

In Anbetracht dieses Standes der Technik liegt der vorliegenden Erfindung die **Aufgabe** zugrunde, unter Meidung der beschriebenen Nachteile eine einfache und kostengünstige Lösung bereitzustellen, die flächendeckend den insbesondere von BOS-Anwendungen gestellten Anforderungen hinsichtlich der Orts- und/oder Zeitwahrscheinlichkeit der Funkversorgung genügend nachkommt. Dabei soll die Erreichbarkeit von Endgeräten in Kommunikationsanwendungen, insbesondere BOS-Anwendungen, verbessert werden.

Zur technischen **Lösung** dieser Aufgabe wird mit der vorliegenden Erfindung ein Mobilfunksystem für Kommunikationsanwendungen mit einem digitalen Bündelfunknetz mit einer aus Funkzellen aufgebauten zellularen Netzstruktur, wenigstens einem mobilen Endgerät, welches zu Kommunikationszwecken in einem ersten Betriebsmodus in Funkzellen des Bündelfunknetzes betreibbar ist und/oder in einem zweiten Betriebsmodus unabhängig von Funkzellen des Bündelfunknetzes eine direkte Funkverbindung nutzend betreibbar ist, wobei mobile Endgeräte im ersten und/oder zweiten Betriebsmodus miteinander verbindbar sind, und wenigstens einem stationären Endgerät, welches zu Kommunikationszwecken in Funkzellen des Bündelfunknetzes betreibbar ist und über das Bündelfunknetz mit wenigstens einem im ersten Betriebsmodus betriebenen mobilen Endgerät verbindbar ist, wobei die Endgeräte ferner zu Kommunikationszwecken in Funkzellen eines öffentlichen zellularen Mobilfunknetzes betreibbar sind und über das Mobilfunknetz miteinander verbindbar sind, vorgeschlagen, bei welchem die Nutzung einer Mobilfunknetzverbindung automatisch erfolgt, wenn eine Verbindung über das Bündelfunknetz nicht möglich und/oder gestört ist.

Der Erfindung liegt die Erkenntnis zugrunde, daß durch eine kombinative Verwendungsmöglichkeit eines digitalen Bündelfunknetzes und eines öffentlichen zellularen Mobilfunknetzes in einem Mobilfunksystem auf einfache und kostengünstige Art und Weise flächendeckende Kommunikationsanwendungen mit gegenüber einem einzelnen Bündelfunknetz oder einem einzelnen Mobilfunknetz verbesserter Ort- und/oder Zeitwahrscheinlichkeit der Funkversorgung realisierbar ist. Die kombinative Nutzung von Bündelfunknetzen und öffentlichen Mobilfunknetzen seitens eines erfindungsgemäßen Mobilfunksystems ermöglicht so beispielsweise bei Ausfall einer Bündelfunknetzverbindung die Nutzung einer Mobilfunknetzverbindung für Kommunikationsanwendungen und verbessert so insbesondere die von BOS-Anwendungen gestellten Anforderungen hinsichtlich der Orts- und/oder Zeitwahrscheinlichkeit der Funkversorgung. Dabei macht sich das erfindungsgemäße Mobilfunksystem die aufgrund der höheren Teilnehmeranzahl potentieller Nutzer in der Regel wirtschaftlich flächendeckend betreibbaren öffentlichen Mobilfunknetze und deren in der Regel bereits vorhandene Infrastruktur vorteilhaft zunutze. Gleiches gilt für die durch Nutzung des Bündelfunknetzes seitens des erfindungsgemäßen Mobilfunksystems eröffnete Möglichkeit einer Gruppenbildung bzw. Gruppenkommunikation, welche vorteilhafterweise über das Mobilfunknetz erfolgende Kommunikationsverbindungen zwischen Teilnehmern im Bündelfunknetz erfolgen können.

In einer vorteilhaften Ausgestaltung der Erfindung erfolgt die Mobilfunknetzverbindung zwischen wenigstens einem mobilen Endgerät und wenigstens einem stationären Endgerät und/oder zwischen wenigstens zwei mobilen Endgeräten. Dabei ist die Nutzung der Mobilfunknetzverbindung vorteilhafterweise einstellbar. So kann der Nutzer eines entsprechenden Endgerätes beispielsweise vorgeben, ob eine Kommunikationsverbindung über das Bündelfunknetz und/oder das Mobilfunknetz erfolgen soll.

Eine vorteilhafte Ausgestaltung des erfindungsgemäßen Mobilfunksystems ist gekennzeichnet durch eine Einstellbarkeit der Nutzung der Mobilfunknetzverbindung von dem mobilen Endgerät her. Die Nutzung der Mobilfunknetzverbindung ist so von einem Nutzer des mobilen Endgerätes seitens desselben einstellbar, beispielsweise durch eine entsprechende Aktivierungseingabe seitens des mobilen Endgerätes. So kann der Nutzer des mobilen Endgerätes beispielsweise bei Ausfall einer Funkversorgung im Bündelfunknetz von Hand auf einen Verbindungsbetrieb im Mobilfunknetz umschalten bzw. zu diesem wechseln.

Eine weitere vorteilhafte Ausgestaltung des erfindungsgemäßen Mobilfunksystems ist gekennzeichnet durch eine Einstellbarkeit der Nutzung der Mobilfunknetzverbindung von dem wenigstens einen stationären Endgerät her. So kann beispielsweise bei Ausfall einer Bündeinetzverbindung zwischen dem stationären Endgerät und einem mobilen Endgerät, welche beispielsweise von dem Nutzer des mobilen Endgerätes nicht bemerkt wird, von dem stationären Endgerät her die entsprechende Nutzung der Mobilfunknetzverbindung seitens des mobilen Endgerätes eingestellt werden. Gleiches gilt für den umgekehrten Fall des Bemerkens bzw. Nichtbemerkens eines Ausfalls einer Bündelfunknetzverbindung zwischen einem mobilen Endgerät und einem stationären Endgerät.

Eine weitere vorteilhafte Ausgestaltung der Erfindung ist gekennzeichnet durch eine Einstellbarkeit der Nutzung der Mobilfunknetzverbindung über das Mobilfunknetz mittels eines Mitteilungsdienstes des Mobilfunknetzes, besonders bevorzugt mittels eines Kurzmitteilungsdienstes, einem sogenannten Short Message Service (SMS) und/oder einem sogenannten Short Data Service (SDS).

Vorteilhafterweise erfolgt die Nutzung der Mobilfunknetzverbindung automatisch, wenn eine Verbindung mit einem mobilen Endgerät über das Bündelfunknetz nicht möglich und/oder gestört ist, vorzugsweise wenn das mobile Endgerät nicht oder nicht mit ausreichender Verbindungsqualität im Bündelfunknetz erreichbar ist.

Eine weitere Ausgestaltung der Erfindung sieht eine Feststellung bzw. Erfassung der Erreichbarkeit des mobilen Endgerätes im Bündelfunknetz und/oder der Verbindungsqualität im Bündelfunknetz seitens des mobilen Endgerätes, seitens wenigstens eines stationären Endgerätes und/oder seitens des Bündelfunknetzes vor.

Eine weitere besonders vorteilhafte Ausgestaltung der Erfindung ist gekennzeichnet durch eine Feststellung bzw. Erfassung einer Wiedererreichbarkeit des Endgerätes im Bündelfunknetz und/oder einer wieder ausreichenden Verbindungsqualität einer Verbindung im Bündelfunknetz seitens des mobilen Endgerätes, seitens wenigstens eines stationären Endgerätes und/oder seitens des Bündelfunknetzes.

Vorteilhafterweise erfolgt bei Erreichbarkeit oder Wiedererreichbarkeit des Endgerätes im Bündelfunknetz und/oder einer ausreichenden oder wieder ausreichenden Verbindungsqualität einer Verbindung im Bündelfunknetz eine Verbindung über das Bündelfunknetz. Durch diese Maßnahmen, einzeln und/oder in Kombination miteinander und vorteilhafterweise automatisch erfolgend, ist gewährleistbar, daß Kommunikationsverbindungen über das Mobilfunknetz ausschließlich dann und nur so lange erfolgen, wie Kommunikationsverbindungen über das Bündelfunknetz nicht bzw. nicht ausreichend möglich sind. Dadurch ist vorteilhafterweise gewährleistbar, daß die insbesondere von BOS-Anwendungen gestellten Anforderungen einer Funkversorgung genügend nachgekommen werden kann. Eine mitunter für Betreiber eines erfindungsgemäßen Mobilfunksystems kostenpflichtige Nutzung von Mobilfunknetzverbindungen erfolgt dementsprechend nur, sofern und so lange eine solche erforderlich ist.

In einer weiteren vorteilhaften Ausgestaltung der Erfindung erfolgt eine Nutzung der Mobilfunknetzverbindung für Verbindungen im ersten Betriebsmodus des Bündelfunknetzes.

In einer weiteren vorteilhaften Ausgestaltung der Erfindung ist wenigstens ein mobiles Endgerät gleichzeitig im ersten und zweiten Betriebsmodus betreibbar. Vorteilhafterweise ist ein gleichzeitig im ersten und zweiten Betriebsmodus betriebenes mobiles Endgerät für im zweiten Betriebsmodus betriebene Endgeräte als Relaisstation betreibbar. Gemäß einer besonders vorteilhaften Ausgestaltung der Erfindung erfolgt eine Nutzung der Mobilfunknetzverbindung für Verbindungen im ersten Betriebsmodus des Bündelfunknetzes für das für im zweiten Betriebsmodus betriebene Endgeräte als Relaisstation betreibbare mobile Endgerät. Vorteilhafterweise ist wenigstens das für im zweiten Betriebsmodus betriebene Endgeräte als Relaisstation betreibbare mobile Endgerät gleichzeitig im Bündelfunknetz und im Mobilfunknetz betreibbar. Durch diese Maßnahmen, einzeln und/oder in Kombination miteinander, sind seitens des erfindungsgemäßen Mobilfunksystems vorteilhafterweise auch mobile Endgeräte bisher bekannter Bündelfunknetze mit diesem nutzbar, welche mit einem entsprechend erfindungsgemäß ausgebildeten mobilen Endgerät im zweiten Betriebsmodus über eine direkte Funkverbindung verbindbar sind. Bereits bestehende Bündelfunknetze sind so durch Nutzung eines erfindungsgemäßen mobilen Endgerätes und einem erfindungsgemäßen stationären Endgerät des erfindungsgemäßen Mobilfunksystems das erfindungsgemäße Mobilfunksystem verwirklichend nachrüstbar.

In einer weiteren vorteilhaften Ausgestaltung der Erfindung ist das wenigstens eine stationäre Endgerät seitens einer dezentralen Leitstelle angeordnet.

Eine besonders bevorzugte Ausgestaltung des erfindungsgemäßen Mobilfunksystems ist gekennzeichnet durch Kommunikationsanwendungen im Bereich von Behörden und/oder Orrganisationen mit Sicherheitsaufgaben.

Vorteilhafterweise sind das Bündelfunknetz und die Endgeräte des erfindungsgemäßen Mobilfunksystems eine Gruppenkommunikation zwischen den Endgeräten ermöglichend ausgebildet.

In einer weiteren bevorzugten Ausgestaltung des erfindungsgemäßen Mobilfunksystems ist das Bündelfunknetz gemäß dem TETRA-Standard und/oder dem TETRAPOL-Standard und/oder das Mobilfunknetz gemäß dem GSM- und/oder UMTS-Standard arbeitend ausgebildet.

Gegenstand der vorliegenden Erfindung ist ferner ein Endgerät für Kommunikationsanwendungen, mit einer in einem digitalen Bündelfunknetz mit einer aus Funkzellen aufgebauten zellularen Netzstruktur betreibbaren Sende-/Empfangseinrichtung, welche zu Kommunikationszwecken in einem ersten Betriebsmodus einen Betrieb in Funkzellen des Bündelfunknetzes ermöglicht und/oder in einem zweiten Betriebsmodus einen Betrieb unabhängig von Funkzellen des Bündelfunknetzes mittels Nutzung einer direkten Funkverbindung ermöglicht, und einer Steuereinrichtung, welche eine Steuerung von Kommunikationsverbindungen der Sende-/Empfangseinrichtung im ersten und/oder zweiten Betriebsmodus ermöglicht, vorgeschlagen, welche eine zu Kommunikationszwecken in Funkzellen eines öffentlichen zellularen Mobilfunknetzes betreibbare Sende-/Empfangseinrichtung aufweist, welche zur Steuerung einer Mobilfunknetzverbindung von der Steuereinrichtung steuerbar ist.

Vorteilhafterweise ist die Steuereinrichtung des erfindungsgemäßen Endgerätes in der Lage, beide Sende-/Empfangseinrichtungen zum Aufbau von Kommunikationsverbindungen gemäß den jeweiligen Kommunikationsprotokollen zu steuern. Seitens des Endgerätes ist so kostengünstigerweise anstelle einer jeweils separat erforderlichen Steuereinrichtung für die jeweilige Sende-/Empfangseinrichtung eine Steuereinrichtung für beide Sende-/Empfangseinrichtungen gegeben.

Vorteilhafterweise ist die Nutzung der Mobilfunknetzverbindung seitens des Endgerätes einstellbar, vorzugsweise über die endgeräteseitige Steuereinrichtung.

In einer weiteren vorteilhaften Ausgestaltung der Erfindung ist die Nutzung der Mobilfunknetzverbindung seitens des Endgerätes einstellbar, wozu dieses vorzugsweise eine Tasten aufweisende Eingabeeinrichtung aufweist.

In einer weiteren vorteilhaften Ausgestaltung der Erfindung ist die Nutzung der Mobilfunknetzverbindung über das Mobilfunknetz einstellbar, vorzugsweise mittels eines Mitteilungsdienstes des Mobilfunknetzes, besonders bevorzugt mittels eines Kurzmitteilungsdienstes (Short Message Service (SMS) und/oder Short Data Service (SDS)).

In einer weiteren besonders vorteilhaften Ausgestaltung der Erfindung gibt die endgeräteseitige Steuereinrichtung automatisch die Nutzung der Mobilfunknetzverbindung vor, wenn eine Verbindung über das Bündelfunknetz nicht möglich und/oder gestört ist, vorzugsweise wenn das Endgerät nicht oder nicht mit ausreichender Verbindungsqualität im Bündelfunknetz erreichbar ist.

Vorteilhafterweise ist die Steuereinrichtung zur Feststellung bzw. Erfassung der Erreichbarkeit und/oder der Verbindungsqualität der Erreichbarkeit des Endgerätes im Bündelfunknetz ausgebildet, vorzugsweise durch Überprüfung bzw. Abfrage wenigstens eines Betriebsparameters der in Funkzellen des Bündelfunknetzes betreibbaren Sende-/Empfangseinrichtung.

Vorteilhafterweise sind die Sende-/Empfangseinrichtungen von der Steuereinrichtung derart steuerbar, daß bei Erreichbarkeit des Endgerätes im Bündelfunknetz und/oder bei Erreichbarkeit des Endgerätes im Bündelfunknetz mit ausreichender Verbindungsqualität eine Verbindung in das Bündelfunknetz über die in Funkzellen des Bündelfunknetzes betreibbare Sende-/Empfangseinrichtung erfolgt.

In einer weiteren vorteilhaften Ausgestaltung der Erfindung ist die in Funkzellen des Bündelfunknetzes betreibbare Sende-/Empfangseinrichtung von der Steuereinrichtung derart steuerbar, daß diese gleichzeitig im ersten und zweiten Betriebsmodus betreibbar ist.

Vorteilhafterweise ist die in Funkzellen des Bündelfunknetzes betreibbare Sende-/Empfangseinrichtung von der Steuereinrichtung derart steuerbar, daß diese für im zweiten Betriebsmodus betriebene Endgeräte als Relaisstation betreibbar ist.

In einer weiteren vorteilhaften Ausgestaltung der Erfindung sind die Sende-/Empfangseinrichtungen von der Steuereinrichtung derart steuerbar, daß eine Nutzung der Mobilfunknetzverbindung für Verbindungen im ersten Betriebsmodus erfolgt.

In einer weiteren vorteilhaften Ausgestaltung der Erfindung sind die Sende-/Empfangseinrichtungen von der Steuereinrichtung derart steuerbar, daß dieses wenigstens bei einem Betrieb für im zweiten Betriebsmodus betriebene Endgeräte als Relaisstation gleichzeitig im Bündelfunknetz und im Mobilfunknetz betreibbar ist.

Vorteilhafterweise ist das Endgerät ein mobiles Endgerät, vorzugsweise nach Art eines Mobilfunktelefons.

Eine weitere vorteilhafte Ausgestaltung der Erfindung sieht vor, daß das erfindungsgemäße Endgerät zur Nutzung in einem erfindungsgemäßen Mobilfunksystem ausgebildet ist.

Gegenstand der vorliegenden Erfindung ist ferner ein Verfahren für Kommunikationsanwendungen zwischen Endgeräten und einem Bündelfunknetz und/oder einem Mobilfunknetz eines erfindungsgemäßen Mobilfunksystems vorgeschlagen, bei welchem wenigstens ein Endgerät, das Bündelfunknetz und/oder das Mobilfunknetz zum Aufbau von Kommunikationsverbindungen gemäß dem erfindungsgemäßen System betrieben werden.

Weitere Einzelheiten, Merkmale und Vorteile der Erfindung werden nachfolgend anhand des in der Figur der Zeichnung dargestellten Ausführungsbeispiels näher erläutert. Dabei zeigt:

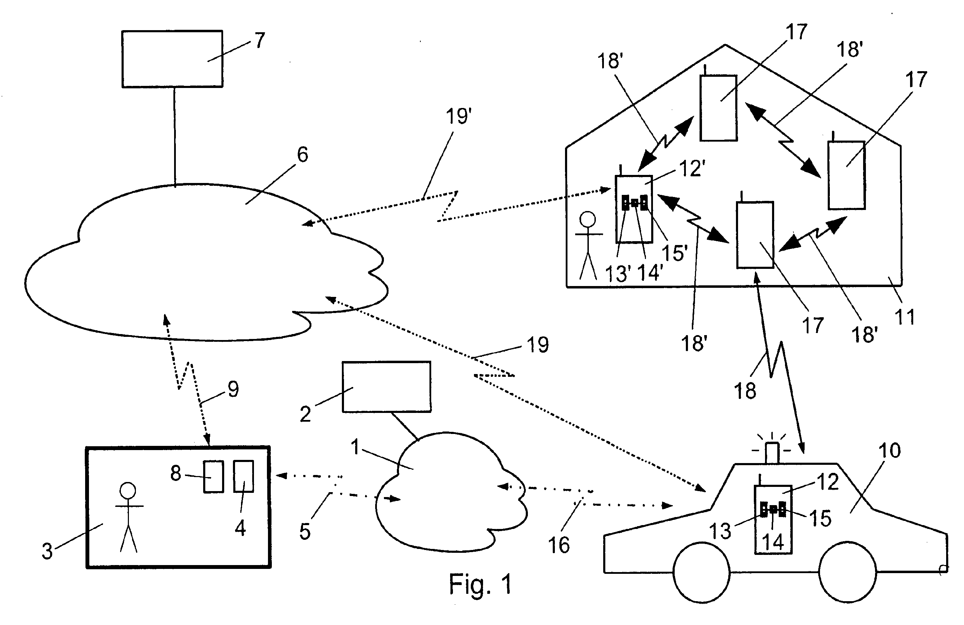

- Fig. 1: in einer schematischen Darstellung ein Ausführungsbeispiel für ein erfindungsgemäßes Mobilfunksystem für Kommunikationsanwendungen.

Das in Fig. 1 dargestellte Mobilfunksystem für Kommunikationsanwendungen wird vorliegend von einer mit der Wahrnehmung von Sicherheitsaufgaben beauftragten öffentlichen Behörde 2 genutzt. Das Mobilfunksystem weist ein digitales Bündelfunknetz 1 mit einer aus Funkzellen aufgebauten zellularen Netzstruktur auf, welches von der Behörde 2 betrieben wird. Die mit der Wahrnehmung der Sicherheitsaufgaben beauftragte Behörde 2 umfaßt dabei wenigstens eine dezentrale, zumindest den Ablauf einzelner wahrzunehmender Sicherheitsaufgaben koordinierende stationäre Leitstelle 3. Die Leitstelle 3 verfügt über wenigstens eine in Funkzellen des Bündelfunknetzes 1 betreibbare Sende-/Empfangseinrichtung 4. Eine zum Austausch von Sprache und/oder Daten dienende Kommunikationsverbindung 5 zwischen dem Bündelfunknetz 1 und der Sende-/Empfangseinrichtung 4 der Leitstelle 3 wird gemäß standardisierter Protokolle des Bündelfunknetzes 1, welches vorliegend gemäß TETRA-Standard ausgebildet ist, aufgebaut und betrieben.

Weiter weist die Leitstelle 3 eine in Funkzellen eines öffentlichen zellularen Mobilfunknetzes 6, welches vorliegend von einem Mobilfunknetzbetreiber 7 unterhalten wird, betreibbare Sende-/Empfangseinrichtung 8 auf. Eine zum Austausch von Sprache und/oder Daten dienende Kommunikationsverbindung 9 ' zwischen dem Mobilfunknetz 6 und der in diesem betreibbaren Sende-/Empfangseinrichtung 8 der Leitstelle 3 wird unter Nutzung standardisierter Protokolle des Mobilfunknetzes 6, welches vorliegend gemäß GSM-Funknetzstandard ausgebildet ist, aufgebaut und betrieben. Die Leitstelle stellt insoweit mit der dem Sende-/Empfangseinrichtungen 4 und 8 und einer diese steuernden Steuereinrichtung, welche vorliegend nicht dargestellt ist, ein erfindungsgemäßes stationäres Endgerät 3 bereit.

Neben der Leitstelle 3 weist die Behörde 2 zur Wahrnehmung der ihr zugewiesenen Sicherheitsaufgaben wenigstens einen Einsatzwagen 10 auf, mit welchem entsprechendes Personal der Behörde 2 zur Wahrnehmung von Sicherheitsaufgaben zu dem jeweiligen Einsatzort 11, vorliegend einem zu sichernden Gebäude 11, gelangen kann.

Der Einsatzwagen 10 ist dabei vorliegend mit einem in diesem fest installierten Endgerät 12 versehen, welches aufgrund der Mobilität des Einsatzwagens 10 ein mobiles Endgerät 12 darstellt. Das mobile Endgerät 12 weist eine in Funkzellen des Bündelfunknetzes 1 betreibbare Sende-/Empfangseinrichtung 13, eine in Funkzellen des Mobilfunknetzes 6 betreibbare Sende-/Empfangseinrichtung 15 und eine Steuereinrichtung 14 auf, welche zur Steuerung der beiden Senden-/Empfangseinrichtungen 13 und 15 ausgebildet ist.

Die in Funkzellen des Bündelfunknetzes 1 betreibbare Sende-/Empfangseinrichtung 13 des Endgerätes 12 ist in einem ersten Betriebsmodus zu Kommunikationszwecken in Funkzellen des Bündelfunknetzes betreibbar. Fig. 1 zeigt zwischen dem Bündelfunknetz 1 und dem Endgerät 12 des Einsatzwagens 10 eine entsprechende Kommunikationsverbindung 16, welche entsprechend zwischen dem Bündelfunknetz 1 und der Sende-/Empfangseinrichtung 13 des Endgerätes 12 des Einsatzwagens 10 bei Bedarf unter Nutzung standardisierter Protokolle des Bündelfunknetzes 1, vorliegend dem TETRA-Standard, aufgebaut und/oder aufrecht erhalten wird. Der erste Betriebsmodus in Funkzellen des Bündelfunknetzes 1 wird auch Netzbetrieb genannt.

In einem zweiten Betriebsmodus der in dem Bündelfunknetz 1 betreibbaren Sende-/Empfangseinrichtung 13 des Endgerätes 12 des Einsatzwagens 10, welcher über die Steuereinrichtung 14 des Endgerätes 12 des Einsatzwagens 10 steuerbar ist, ist dieses unabhängig von Funkzellen des Bündelfunknetzes 1 mittels Nutzung einer direkten Funkverbindung 18 mit eine entsprechende Funkverbindung nutzenden mobilen Endgeräten 12' und 17 verbindbar. Die mobilen Endgeräte 12' und 17 werden dabei vorliegend von sich in dem zu sichernden Gebäude 11 befindlichen Personal der Behörde 7 genutzt und sind nach Art eines Mobilfunktelefons tragbar und/oder bedienbar ausgebildet. Die Endgeräte 12, 12' und 17 sind dabei untereinander eine Gruppenkommunikation betreibend mittels direkter Funkverbindungen 18' verbindbar. Der eine direkte Funkverbindung zwischen den mobilen Endgeräten 12, 12' und 17 ermöglichende zweite Betriebsmodus wird auch als sogenannter Direktmodus des Bündelfunknetzes 1 bezeichnet.

Das Endgerät 12 ist über die in Funkzellen des Mobilfunknetzes 6 betreibbare Sende-/Empfangseinrichtung 15 zu Kommunikationszwecken über eine entsprechende Kommunikationsverbindung 19 mit dem Mobilfunknetz 6 verbindbar. Die zwischen dem Mobilfunknetz 6 und der Sende-/Empfangseinrichtung 15 des Endgerätes 12 dazu erfolgende Kommunikationsverbindung 19 wird gemäß den standardisierten Kommunikationsprotokollen des Mobilfunknetzes 6, vorliegend gemäß dem GSM-Funknetzstandard, aufgebaut und betrieben. Die in Funkzellen des Mobilfunknetzes 6 betreibbare Sende-/Empfangseinrichtung 15 des Endgerätes 12 wird dabei entsprechend von der Steuereinrichtung 14 des Endgerätes 12 gesteuert.

Das von entsprechendem Bedienpersonal der Behörde 2 vorliegend seitens des Gebäudes 11 genutzte mobile Endgerät 12' ist entsprechend dem quasi mobilen Endgerät 12 seitens des Einsatzwagens ausgebildet, jedoch von dem Bedienpersonal nach Art eines Mobilfunktelefons tragbar und bedienbar.

Im zweiten Betriebsmodus mittels Nutzung einer Direktfunkverbindung 18 erfolgende Kommunikationsverbindungen 18 werden seitens des mobilen Endgerätes 12' entsprechend von der Sende-/Empfangseinrichtung 14' gesteuert. Über in Funkzellen des Bündelfunknetzes 1 betreibbare Sende-/Empfangseinrichtung 13' des mobilen Endgerätes 12' können bei Bedarf entsprechende Kommunikationsverbindungen über das Bündelfunknetz 1 erfolgen, wobei dessen Kommunikationsprotokollege genutzt werden. Entsprechend kann eine Kommunikationsverbindung 19' zwischen dem Mobilfunknetz 6 und dem mobilen Endgerät 12' über die in Funkzellen des Mobilfunknetzes 6 betreibbare Sende-/Empfangseinrichtung 15' des mobilen Endgerätes 12' gesteuert von der Steuereinrichtung 14' des mobilen Endgerätes 12' unter Nutzung entsprechender Kommunikationsprotokolle des Mobilfunknetzes 6 erfolgen.

Das Endgerät 12 als auch das mobile Endgerät 12' sind bei entsprechender Steuerung über die Steuereinrichtung 14 bzw. 14' derart steuerbar, daß diese über die Sende-/Empfangseinrichtung 13 bzw. 13' sowohl in dem ersten in Funkzellen des Bündelfunknetzes 1 betreibbaren Betriebsmodus als auch gleichzeitig in dem zweiten unabhängig von Funkzellen des Bündelfunknetzes 1 eine direkte Funkverbindung 18 bzw. 18' nutzenden Betriebsmodus betreibbar sind. Die entsprechend betriebenen Endgeräte 12 bzw. 12' sind so als sogenannte Relaisstationen für im zweiten Betriebsmodus unabhängig von Funkzellen des Bündelfunknetzes 1 eine direkte Funkverbindung 18 bzw. 18' nutzende mobile Endgeräte 17 bzw. bei entsprechender Steuerung auch der Endgeräte 12 bzw. 12' nutzbar.

Bei einem Betrieb des Endgerätes 12 als Relaisstation für sich in dem Gebäude 11 befindende mobile Endgeräte 12' und 17, welche im zweiten Betriebsmodus untereinander über Direktfunkverbindungen 18' und mit dem Endgerät 12 über eine direkte Funkverbindung 18 eine Gruppenkommunikation verwirklichend verbindbar sind, sind diese über das Endgerät 12 im ersten Betriebsmodus der Sende-/Empfangseinrichtung 13 über das Bündelfunknetz erfolgende Kommunikationsverbindungen 16 und 5 mit der Leitstelle 3 verbindbar. Alternativ und/oder gleichzeitig kann je nach erfindungsgemäßer Ausgestaltung der Steuerung der Sende-/Empfangseinrichtungen 13 und 15 des Endgerätes 12 über die Steuereinrichtung 14 bei Betrieb in einem entsprechenden Relaisbetrieb desselben eine Kommunikationsverbindung zwischen im zweiten Betriebsmodus betriebenen mobilen Endgeräten 12' bzw. 17 im Gebäude 11 und der Leitstelle 3 über die eine entsprechende Gruppenkommunikation mittels Direktfunkverbindungen 18 bzw. 18' und über das Mobilfunknetz 6 mittels der entsprechenden Kommunikationsverbindungen 19 und 9 erfolgen. Entsprechende Kommunikationsverbindungen über das Mobilfunknetz sind entsprechend mit dem mobilen Endgerät 12' bei dementsprechender Steuerung der Sende-/Empfangseinrichtungen 13' bzw. 15' mittels der über das Mobilfunknetz 6 erfolgenden Kommunikationsverbindungen 19' und 9 zu der Leitstelle 3 ermöglichbar. Bei Ausfall einer Kommunikationsverbindung über das Bündelfunknetz ist dementsprechend eine Kommunikationsverbindung über das Mobilfunknetz sicherstellbar.

Die eine in Funkzellen des Bündelfunknetzes betreibbare Sende-/Empfangseinrichtung 4 und eine in Funkzellen des Mobilfunknetzes 6 betreibbare Sende-/Empfangseinrichtung 8 aufweisende Leitstelle 3 stellt insofern ein entsprechendes in dem erfindungsgemäßen Mobilfunksystem betreibbares stationäres Endgerät dar.

Die Nutzung von über das Mobilfunknetz 6 erfolgenden Kommunikationsverbindungen 9, 19 und/oder 19' ist vorliegend sowohl seitens der jeweiligen Endgeräte 12 bzw. 12' bzw. der Leitstelle 3 von Hand als auch über das Mobilfunknetz 6 über die entsprechenden Kommunikationsverbindungen 9, 19 bzw. 19' vorgebbar, vorzugsweise durch Nutzung des Sendens von sogenannten Kurznachrichten (SMS und/oder SDS) zur entsprechenden Provisionierung der jeweiligen Betriebsmodi der Endgeräte.

Das in der Fig. der Zeichnung dargestellte Ausführungsbeispiel dient lediglich der Erläuterung der Erfindung und ist für diese nicht beschränkend.

### Bezugszeichenliste

- 1: Bündelfunknetz
- 2: Behörde/Bündelfunknetzbetreiber
- 3: dezentrale Leitstelle/stationäres Endgerät (Behörde (2))
- 4: Sende-/Empfangseinrichtung Bündelfunknetz (Leitstelle (3))
- 5: Kommunikationsverbindung Bündelfunknetz (erster Betriebsmodus)
- 6: Mobilfunknetz
- 7: Mobilfunknetzbetreiber
- 8: Sende-/Empfangseinrichtung Mobilfunknetz (Leitstelle (3))
- 9: Kommunikationsverbindung Mobilfunknetz
- 10: Einsatzwagen
- 11: Einsatzort/Gebäude
- 12: Endgerät (Einsatzwagen (10))
- 12': mobiles Endgerät (Einsatzwagen (10))
- 13: Sende-/Empfangseinrichtung Bündelfunknetz (Endgerät (12))
- 13': Sende-/Empfangseinrichtung Bündelfunknetz (Endgerät (12))
- 14: Steuereinrichtung (Endgerät (12))
- 14': Steuereinrichtung (Endgerät (12))
- 15: Sende-/Empfangseinrichtung Mobilfunknetz (Endgerät (12))
- 15': Sende-/Empfangseinrichtung Mobilfunknetz (Endgerät (12))
- 16: Kommunikationsverbindung Bündelfunknetz (erster Betriebsmodus)
- 17: mobiles Endgerät (Bündelfunknetz zweiter Betriebsmodus)
- 18: Kommunikationsverbindung Bündelfunknetz (zweiter Betriebsmodus)
- 18': Kommunikationsverbindung Bündelfunknetz (zweiter Betriebsmodus)
- 19: Kommunikationsverbindung Mobilfunknetz
- 19': Kommunikationsverbindung Mobilfunknetz

## Patentansprüche

1. Mobilfunksystem für Kommunikationsanwendungen mit
einem digitalen Bündelfunknetz (1) mit einer aus Funkzellen aufgebauten zellularen Netzstruktur,
wenigstens einem mobilen Endgerät (12, 12', 17), welches zu Kommunikationszwecken
in einem ersten Betriebsmodus in Funkzellen des Bündelfunknetzes (1) betreibbar ist
und/oder
in einem zweiten Betriebsmodus unabhängig von Funkzellen des Bündelfunknetzes (1) eine direkte Funkverbindung nutzend betreibbar ist,
wobei
mobile Endgeräte (12, 12') im ersten und/oder zweiten Betriebsmodus miteinander verbindbar sind,
und
wenigstens einem stationären Endgerät (3), welches zu Kommunikationszwecken
in Funkzellen des Bündelfunknetzes (1) betreibbar ist
und
über das Bündelfunknetz (1) mit wenigstens einem im ersten Betriebsmodus betriebenen mobilen Endgerät (12, 12', 17) verbindbar ist,
wobei die Endgeräte (12, 12', 3) ferner zu Kommunikationszwecken in Funkzellen eines öffentlichen zellularen Mobilfunknetzes (6) betreibbar sind und über das Mobilfunknetz (6) miteinander verbindbar sind,
**dadurch gekennzeichnet, daß** die Nutzung einer Mobilfunknetzverbindung (9, 19, 19') automatisch erfolgt, wenn eine Verbindung (5, 16, 18, 18') über das Bündelfunknetz (1) nicht möglich und/oder gestört ist.

2. Mobilfunksystem nach Anspruch 1, **dadurch gekennzeichnet, daß** die Nutzung der Mobilfunknetzverbindung (9, 19, 19') automatisch erfolgt, wenn eine Verbindung (5, 16, 18, 18') mit einem mobilen Endgerät (12, 12', 17) über das Bündelfunknetz (1) nicht möglich und/oder gestört ist.

3. Mobilfunksystem nach Anspruch 2, **dadurch gekennzeichnet, daß** die Nutzung der Mobilfunknetzverbindung (9, 19, 19') automatisch erfolgt, wenn das mobile Endgerät (12, 12', 17) nicht oder nicht mit ausreichender Verbindungsqualität im Bündelfunknetz (1) erreichbar ist.

4. Mobilfunksystem nach Anspruch 2 oder Anspruch 3, **gekennzeichnet durch** eine Feststellung der Erreichbarkeit des mobilen Endgerätes (12, 12', 17) im Bündelfunknetz (1) und/oder der Verbindungsquatität im Bündelfunknetz (1) seitens des mobilen Endgerätes (12, 12', 17), seitens wenigstens eines stationären Endgerätes (3) und/oder seitens des Bündelfunknetzes (1).

5. Mobilfunksystem nach einem der Ansprüche 2 bis 4, **gekennzeichnet durch** eine Feststellung einer Wiedererreichbarkeit des Endgerätes (3, 12, 12', 17) im Bündelfunknetz (1) und/oder einer wieder ausreichenden Verbindungsqualität einer Verbindung (5, 16, 18, 18') im Bündelfunknetz (1) seitens des mobilen Endgerätes (12, 12', 17), seitens wenigstens eines stationären Endgerätes (3) und/oder seitens des Bündelfunknetzes (1).

6. Mobilfunksystem nach Anspruch 9 5, **dadurch gekennzeichnet, daß** bei Erreichbarkeit oder Wiedererreichbarkeit des Endgerätes (3, 12, 12', 17) im Bündelfunknetz (1) und/oder einer ausreichenden oder wieder ausreichenden Verbindungsqualität einer Verbindung (5, 16, 18, 18') im Bündelfunknetz (1) eine Verbindung (5, 16, 18, 18') über das Bündelfunknetz (1) erfolgt.

7. Mobilfunksystem nach **einem der Ansprüche 1 bis 6**, **dadurch gekennzeichnet, daß** die Mobilfunknetzverbindung (9, 19, 19') zwischen wenigstens einem mobilen Endgerät (12, 12') und wenigstens einem stationären Endgerät (3) erfolgt.

8. Mobilfunksystem nach **einem der Ansprüche 1 bis 7**, **dadurch gekennzeichnet, daß** die Nutzung der Mobilfunknetzverbindung (9, 19, 19') einstellbar ist.

9. Mobilfunksystem nach Anspruch 8, **gekennzeichnet durch** eine Einstellbarkeit der Nutzung der Mobilfunknetzverbindung (9, 19, 19') von dem mobilen Endgerätes (12, 12') her.

10. Mobilfunksystem nach Anspruch **8** oder Anspruch **9**, **gekennzeichnet durch** eine Einstellbarkeit der Nutzung der Mobilfunknetzverbindung (9, 19, 19') von dem wenigstens einen stationären Endgerät (3) her.

11. Mobilfunksystem nach einem der Ansprüche 1 bis 10, **dadurch gekennzeichnet, daß** eine Nutzung der Mobilfunknetzverbindung (9, 19, 19') für Verbindungen (5, 16) im ersten Betriebsmodus erfolgt.

12. Mobilfunksystem nach einem der Ansprüche 1 bis 11, **dadurch gekennzeichnet, daß** wenigstens ein mobiles Endgerät (12, 12') gleichzeitig im ersten und zweiten Betriebsmodus betreibbar ist.

13. Mobilfunksystem nach Anspruch 12, **dadurch gekennzeichnet, daß** ein gleichzeitig im ersten und zweiten Betriebsmodus betriebenes mobiles Endgerät (12, 12') für im zweiten Betriebsmodus betriebene Endgeräte (12', 17) als Relaisstation betreibbar ist.

14. Mobilfunksystem nach Anspruch 13, **dadurch gekennzeichnet, daß** eine Nutzung der Mobilfunknetzverbindung (5, 19, 19') für Verbindungen (5, 16) im ersten Betriebsmodus für das für im zweiten Betriebsmodus betriebene Endgeräte (12', 17) als Relaisstation betreibbare mobile Endgerät (12) erfolgt.

15. Mobilfunksystem nach Anspruch 13 oder Anspruch 14, **dadurch gekennzeichnet, daß** wenigstens das für im zweiten Betriebsmodus betriebene Endgeräte (12', 17) als Relaisstation betreibbare mobile Endgerät (12) gleichzeitig im Bündelfunknetz (1) und im Mobilfunknetz (6) betreibbar ist.

16. Mobilfunksystem nach einem der Ansprüche 1 bis 15, **dadurch gekennzeichnet, daß** das wenigstens eine stationäre Endgerät (3, 4, 8) seitens einer dezentralen Leitstelle (3) angeordnet ist.

17. Mobilfunksystem nach einem der Ansprüche 1 bis 16, **dadurch gekennzeichnet, daß** das Bündelfunknetz (1) und die Endgeräte (12, 12', 17, (3, 4, 8)) eine Gruppenkommunikation zwischen den Endgeräten (12, 12', 17, (3, 4, 8)) ermöglichend ausgebildet sind.

18. Endgerät (3, 12, 12') für Kommunikationsanwendungen mit
einer in einem digitalen Bündelfunknetz (1) mit einer aus Funkzellen aufgebauten zellularen Netzstruktur betreibbaren Sende-/Empfangseinrichtung (4, 13, 13'), welche zu Kommunikationszwecken
in einem ersten Betriebsmodus einen Betrieb in Funkzellen des Bündelfunknetzes (1) ermöglicht
und/oder
in einem zweiten Betriebsmodus einen Betrieb unabhängig von Funkzellen des Bündelfunknetzes (1) mittels Nutzung einer direkten Funkverbindung (18,18') ermöglicht,
einer Steuereinrichtung (14, 14'), welche
eine Steuerung von Kommunikationsverbindungen (5, 16, 18, 18') der Sende-/Empfangseinrichtung (4, 13, 13') im ersten und/oder zweiten Betriebsmodus ermöglicht,
**und** einer zu Kommunikationszwecken in Funkzellen eines öffentlichen zellularen Mobilfunknetzes (6) betreibbaren Sende-/Empfangseinrichtung (8, 15, 15'), welche zur Steuerung einer Mobilfunknetzverbindung (9, 19, 19') von der Steuereinrichtung (14, 14') steuerbar ist,
**dadurch gekennzeichnet, daß die Steuereinrichtung (14, 14') automatisch die Nutzung der Mobilfunknetzverbindung (9, 19, 19') vorgibt, wenn eine** Verbindung über das Bündelfunknetz (1) nicht möglich und/oder gestört ist.

19. Endgerät (3, 12, 12') nach Anspruch 18, **dadurch gekennzeichnet, daß** die Steuereinrichtung (14, 14') automatisch die Nutzung der Mobilfunknetzverbindung (9, 19, 19') vorgibt, wenn das Endgerät (3, 12, 12') nicht oder nicht mit ausreichender Verbindungsqualität im Bündelfunlknetz (1) erreichbar ist.

20. Endgerät (3, 12, 12') nach Anspruch 18 oder Anspruch 19, **dadurch gekennzeichnet, daß** die Steuereinrichtung (14, 14') zur Feststellung der Erreichbarkeit des Endgerätes (3, 12, 12') im Bündelfunknetz (1) ausgebildet ist.

21. Endgerät (3, 12, 12') nach einem der Ansprüche 18 bis 20, **dadurch gekennzeichnet, daß** die Steuereinrichtung (14, 14') zur Feststellung der Erreichbarkeit des Endgerätes (3, 12, 12') im Bündelfunknetz (1) durch Überprüfung wenigstens eines Betriebsparameters der in Funkzellen des Bündelfunknetzes (1) betreibbaren Sende-/Empfangseinrichtung (4, 13,13') ausgebildet ist.

22. Endgerät (3, 12, 12') nach einem der Ansprüche 18 bis 21, **dadurch gekennzeichnet, daß** die Sende-/Empfangseinrichtungen (4, 13, 13') von der Steuereinrichtung (14, 14') derart steuerbar sind, daß bei Erreichbarkeit des Endgerätes (3, 12, 12') im Bündelfunknetz (1) und/oder bei Erreichbarkeit des Endgerätes (3, 12, 12') im Bündelfunknetz (1) mit ausreichender Verbindungsqualität eine Verbindung (5, 16) in das Bündelfunknetz (1) über die in Funkzellen des Bündelfunknetzes (1) betreibbare Sende-/Empfangseinrichtung (4,13,13') erfolgt.

23. Endgerät (3, 12, 12') nach **einem der Ansprüche** 18 **bis 22**, **dadurch gekennzeichnet, daß** die Nutzung der Mobilfunknetzverbindung (9, 19, 19') über die Steuereinrichtung (14, 14') **einstellbar ist**.

24. Endgerät (3, 12, 12') nach **einem der Ansprüche 18 bis 23**, **dadurch gekennzeichnet, daß** die Nutzung der Mobilfunknetzverbindung (9, 19, 19') seitens des Endgerätes (3, 12, 12') einstellbar ist.

25. Endgerät (3, 12, 12') nach einem der Ansprüche 18 bis **24**, **dadurch gekennzeichnet, daß** die Nutzung der Mobilfunknetzverbindung (9, 19, 19') über das Mobilfunknetz (6) mittels eines Mitteilungsdienstes des Mobilfunknetzes (6) **einstellbar ist**.

26. Endgerät (3, 12, 12') nach einem der Ansprüche 18 bis **25**, **dadurch gekennzeichnet, daß** die in Funkzellen des Bündelfunknetzes (1) betreibbare Sende-/Empfangseinrichtung (4, 13', 13) von der Steuereinrichtung (14, 14') derart steuerbar ist, daß diese gleichzeitig im ersten und zweiten Betriebsmodus betreibbar ist.

27. Endgerät (3, 12, 12') nach Anspruch **26**, **dadurch gekennzeichnet, daß** die in Funkzellen des Bündelfunknetzes betreibbare Sende-/Empfangseinrichtung von der Steuereinrichtung derart steuerbar ist, daß dieses für im zweiten Betriebsmodus betriebene Endgeräte als Relaisstation betreibbar ist.

28. Endgerät (3, 12, 12') nach einem der Ansprüche 18 bis 27, **dadurch gekennzeichnet, daß** die Sende-/Empfangseinrichtungen (4, 13, 13') von der Steuereinrichtung (14, 14') derart steuerbar sind, daß eine Nutzung der Mobilfunknetzverbindung (9, 19, 19') für Verbindungen (5, 16) im ersten Betriebsmodus erfolgt.

29. Endgerät (3, 12, 12') nach einem der Ansprüche 18 bis **28**, **dadurch gekennzeichnet, daß** die Sende-/Empfangseinrichtungen (4, 8, 13, 13', 15, 15') von der Steuereinrichtung (14, 14') derart steuerbar sind, daß dieses wenigstens bei einem Betrieb für im zweiten Betriebsmodus betriebene Endgeräte (17) als Relaisstation gleichzeitig im Bündelfunknetz (1) und im Mobilfunknetz (6) betreibbar ist.

30. Endgerät (3, 12, 12') nach einem der Ansprüche 18 bis **29**, **dadurch gekennzeichnet, daß** dieses zur Nutzung in einem Mobilfunksystem nach einem der Ansprüche 1 bis **17** ausgebildet ist.

31. Verfahren zum Aufbau von Kommunikationsverbindungen (5, 9, 16, 18, 18', 19, 19') zwischen Endgeräten (3, 12, 12', 17) und einem Bündelfunknetz (1) und/oder einem Mobilfunknetz (6) eines Mobilfunksystems mit
einem digitalen Bündelfunknetz (1) mit einer aus Funkzellen aufgebauten zellularen Netzstruktur,
wenigstens einem mobilen Endgerät (12, 12', 17), welches zu Kommunikationszwecken
in einem ersten Betriebsmodus in Funkzellen des Bündelfunknetzes (1) betreibbar ist
und/oder
in einem zweiten Betriebsmodus unabhängig von Funkzellen des Bündelfunknetzes (1) eine direkte Funkverbindung nutzend betreibbar ist,
wobei
mobile Endgeräte (12, 12') im ersten und/oder zweiten Betriebsmodus miteinander verbindbar sind,
und
wenigstens einem stationären Endgerät (3), welches zu Kommunikationszwecken
in Funkzellen des Bündelfunknetzes (1) betreibbar ist
und
über das Bündelfunknetz (1) mit wenigstens einem im ersten Betriebsmodus betriebenen mobilen Endgerät (12, 12', 17) verbindbar ist,
wobei die Endgeräte (12, 12', 3) ferner zu Kommunikationszwecken in Funkzellen eines öffentlichen zellularen Mobilfunknetzes (6) betreibbar sind und über das Mobilfunknetz (6) miteinander verbindbar sind,
**dadurch gekennzeichnet, dass**
für eine Kommunikationsverbindung automatisch die Nutzung einer Mobilfunknetzverbindung (9, 19, 19') erfolgt, wenn eine Kommunikationsverbindung (5, 16, 18, 18') über das Bündelfunknetz (1) nicht möglich und/oder gestört ist.

32. Verfahren nach Anspruch 31, **gekennzeichnet durch** die Nutzung eines Mobilfunksystems nach einem der Ansprüche 1 bis 17.

33. Verfahren nach Anspruch 31 oder Anspruch 32, **gekennzeichnet durch** die Nutzung eines Endgerätes (3, 12, 12') nach einem der Ansprüche 18 bis 30.

## Claims

1. A mobile communication system for communications applications, comprising a digital trunked radio network (1) having a cellular network structure composed of radio cells,
at least one mobile terminal (12, 12', 17) which for communication purposes
can be operated in a first operating mode in radio cells of the trunked radio network (1)
and/or
in a second operating mode, independent from radio cells of the trunked radio network (1), using a direct radio connection,
wherein
mobile terminals (12, 12') in the first and/or second operating mode can be connected to each other,
and
at least one stationary terminal (3) which for communication purposes
can be operated in radio cells of the trunked radio network (1)
and
can be connected via the trunked radio network (1) to at least one mobile terminal (12. 12', 17) operated in the first operating mode,
wherein, for communication purposes, the terminals (12, 12', 17) can be furthermore operated in radio cells of a public cellular mobile radio network (6) and can be connected to each other via the mobile radio network (6), **characterized in that** the use of a mobile radio network connection (9, 19, 19') will take place automatically, if a connection (5, 16, 18, 18') via the trunked radio network (1) is not possible and/or is disturbed.

2. A mobile communication system according to claim 1, **characterized in that** the use of the mobile radio network connection (9, 19, 19') will take place automatically, if a connection (5, 16, 18, 18') to a mobile terminal (12, 12', 17) via the trunked radio network (1) is not possible and/or disturbed.

3. A mobile communication system according to claim 2, **characterized in that** the use of the mobile radio network connection (9, 19, 19') will take place automatically, if the mobile terminal (12, 12', 17) cannot be reached or can only be reached with an insufficient quality of connection in the trunked radio network (1).

4. A mobile communication system according to claim 2 or claim 3, **characterized by** a determination of the reachability of the mobile terminal (12, 12', 17) in the trunked radio network (1) and/or the quality of connection in the trunked radio network (1) by means of the mobile terminal (12, 12', 17), by means of at least one stationary terminal (3) and/or by means of the trunked radio network (1).

5. A mobile communication system according to one of the claims 2 through 4, **characterized by** a determination of a restored reachability of the terminal (3, 12, 12', 17) in the trunked radio network (1) and/or a restored sufficient quality of connection of a connection (5, 16, 18, 18') in the trunked radio network (1) by means of the mobile terminal (12, 12', 17), by means of at least one stationary terminal (3) and/or by means of the trunked radio network (1).

6. A mobile communication system according to claim 5, **characterized in that** in case of reachability or restored reachability of the terminal (3, 12, 12', 17) in the trunked radio network (1) and/or a sufficient or restored sufficient quality of connection of a connection (5, 16, 18, 18') in the trunked radio network (1) a connection (5, 16, 18, 18') will be realized via the trunked radio network (1).

7. A mobile communication system according to one of the claims 1 through 6, **characterized in that** the mobile radio network connection (9, 19, 19') will be established between at least one mobile terminal (12, 12') and at least one stationary terminal (3).

8. A mobile communication system according to one of the claims 1 through 7, **characterized in that** the use of the mobile radio network connection (9, 19, 19') can be set.

9. A mobile communication system according to claim 8, **characterized in that** the use of the mobile radio network connection (9, 19, 19') can be set by the mobile terminal (12, 12').

10. A mobile communication system according to claim 8 or claim 9, **characterized in that** the use of the mobile radio network connection (9, 19, 19') can be set by the at least one stationary terminal (3).

11. A mobile communication system according to one of the claims 1 through 10, **characterized in that** the mobile radio network connection (9, 19, 19') is used for connections (5, 16) in the first operating mode.

12. A mobile communication system according to one of the claims 1 through 11, **characterized in that** at least one mobile terminal (12, 12') can be simultaneously operated in the first and second operating mode.

13. A mobile communication system according to claim 12, **characterized in that** a mobile terminal (12, 12') that is simultaneously operated in the first and second operating mode can be operated as relay station for terminals (12', 17) operated in the second operating mode.

14. A mobile communication system according to claim 13, **characterized in that** the mobile radio network connection (9, 19, 19') is used for connections (5, 16) in the first operating mode for the mobile terminal (12) that can be operated as relay station for terminals (12', 17) operated in the second operating mode.

15. A mobile communication system according to claim 13 or claim 14, **characterized in that** at least the mobile terminal (12) that can be operated as relay station for terminals (12', 17) operated in the second operating mode can be simultaneously operated in the trunked radio network (1) and in the mobile radio network (6).

16. A mobile communication system according to one of the claims 1 through 15, **characterized in that** the at least one stationary terminal (3, 4, 8) is arranged by a decentralized control center (3).

17. A mobile communication system according to one of the claims 1 through 16, **characterized in that** the trunked radio network (1) and the terminals (12, 12', 17, (3, 4, 8)) are designed such that they enable a group communication between the terminals (12, 12', 17, (3, 4, 8)).

18. A terminal (3, 12, 12') for communications applications, comprising
a transmitting/receiving device (4, 13, 13') which can be operated in a digital trunked radio network (1) having a cellular network structure composed of radio cells and which, for communications applications
in a first operating mode, enables an operation in radio cells of the trunked radio network (1)
and/or
in a second operating mode, enables an operation independent from radio cells of the trunked radio network (1) using a direct radio connection (18, 18')
a control device (14, 14') which
enables a control of communication connections (5, 16, 18, 18') of the transmitting/receiving device (4, 13, 13') in the first and/or second operating mode,
and a transmitting/receiving device (8, 15, 15') which for communication purposes can be operated in radio cells of a public cellular mobile radio network (6) and which can be controlled by the control device (14, 14') for controlling a mobile radio network connection (9, 19, 19'),
**characterized in that** the control device (14, 14') automatically determines the use of the mobile radio network connection (9, 19, 19'), if a connection via the trunked radio network (1) is not possible and/or disturbed.

19. A terminal (3, 12, 12') according to claim 18, **characterized in that** the control device (14, 14') automatically determines the use of the mobile radio network connection (9, 19, 19'), if the terminal (3, 12, 12') cannot be reached or can only be reached with an insufficient quality of connection in the trunked radio network (1).

20. A terminal (3, 12, 12') according to claim 18 or claim 19, **characterized in that** the control device (14, 14') is designed for determining the reachability of the terminal (3, 12, 12') in the trunked radio network (1).

21. A terminal (3, 12, 12') according to one of the claims 18 through 20, **characterized in that** the control device (14, 14') is designed for determining the reachability of the terminal (3, 12, 12') in the trunked radio network (1) by checking at least one operating parameter of the transmitting/receiving device (4, 13, 13') that can be operated in radio cells of the trunked radio network (1).

22. A terminal (3, 12, 12') according to one of the claims 18 through 21, **characterized in that** the transmitting/receiving devices (4, 13, 13') can be controlled by the control device (14, 14') such that if the terminal (3, 12, 12') is reachable in the trunked radio network (1) and/or if the terminal (3, 12, 12') is reachable in the trunked radio network (1) with a sufficient quality of connection, a connection (5, 16) into the trunked radio network (1) will be established via the transmitting/receiving device (4, 13, 13') that can be operated in radio cells of the trunked radio network (1).

23. A terminal (3, 12, 12') according to one of the claims 18 through 22, **characterized in that** the use of the mobile radio network connection (9, 19, 19') can be set by means of the control device (14, 14').

24. A terminal (3, 12, 12') according to one of the claims 18 through 23, **characterized in that** the use of the mobile radio network connection (9, 19, 19') can be set by means of the terminal (3, 12, 12').

25. A terminal (3, 12, 12') according to one of the claims 18 through 24, **characterized in that** the use of the mobile radio network connection (9, 19, 19') can be set via the mobile radio network by means of a message service of the mobile radio network (6).

26. A terminal (3, 12, 12') according to one of the claims 18 through 25, **characterized in that** the transmitting/receiving device (4, 13', 13) that can be operated in radio cells of the trunked radio network (1) can be controlled by the control device (14, 14') such that said transmitting/receiving device (4, 13', 13) can be simultaneously operated in the first and second operating mode.

27. A terminal (3, 12, 12') according to claim 26, **characterized in that** the transmitting/receiving device that can be operated in radio cells of the trunked radio network can be controlled by the control device such that said terminal can be operated as relay station for terminals operated in the second operating mode.

28. A terminal (3, 12, 12') according to one of the claims 18 through 27, **characterized in that** the transmitting/receiving devices (4, 13, 13') can be controlled by the control device (14, 14') such that a use of the mobile radio network connection (9, 19, 19') takes place for connections (5, 16) in the first operating mode.

29. A terminal (3, 12, 12') according to one of the claims 18 through 28, **characterized in that** the transmitting/receiving devices (4, 8, 13, 13', 15, 15') can be controlled by the control device (14, 14') such that if said terminal is operated as relay station for terminals (17) operated in the second operating mode, it can be simultaneously operated in the trunked radio network (1) and in the mobile radio network (6).

30. A terminal (3, 12, 12') according to one of the claims 18 through 29, **characterized in that** this one is designed for being used in a mobile communication system according to one of the claims 1 through 17.

31. A method for establishing communication connections (5, 9, 16, 18, 18', 19, 19') between terminals (3, 12, 12', 17) and a trunked radio network (1) and/or a mobile radio network (6) of a mobile communication system comprising
a digital trunked radio network (1) having a cellular network structure composed of radio cells,
at least one mobile terminal (12, 12', 17) which for communication purposes
can be operated in a first operating mode in radio cells of the trunked radio network (1)
and/or
in a second operating mode, independent from radio cells of the trunked radio network (1), using a direct radio connection,
wherein
mobile terminals (12, 12') in the first and/or second operating mode can be connected to each other,
and
at least one stationary terminal (3) which for communication purposes
can be operated in radio cells of the trunked radio network (1)
and
be connected via the trunked radio network (1) to at least one mobile terminal (12. 12', 17) operated in the first operating mode,
wherein, for communication purposes, the terminals (12, 12', 17) can be furthermore operated in radio cells of a public cellular mobile radio network (6) and be connected to each other via the mobile radio network (6),
**characterized in that**
the use of a mobile radio network connection (9, 19, 19') will take place automatically for a communication connection, if a communication connection (5, 16, 18, 18') via the trunked radio network (1) is not possible and/or is disturbed.

32. A method according to claim 31, **characterized by** the use of a mobile communication system according to one of the claims 1 through 17.

33. A method according to claim 31 or claim 32, **characterized by** the use of a terminal (3, 12, 12') according to one of the claims 18 through 30.

## Revendications

1. Système de communication mobile pour des applications de communication, comprenant
un réseau radio numérique à ressources partagées (1) ayant une structure de réseau cellulaire composée de cellules radio,
au moins un terminal mobile (12, 12', 17), qui, à des fins de communication,
peut être opéré dans un premier mode de fonctionnement dans des cellules du réseau radio à ressources partagées (1)
et/ou
dans un deuxième mode de fonctionnement indépendamment des cellules radio du réseau radio à ressources partagées (1) en utilisant une liaison radio directe,
dans lequel
des terminaux mobiles (12, 12') dans un premier et/ou deuxième mode de fonctionnement peuvent être reliés les uns aux autres,
et
au moins un terminal stationnaire (3), qui, à des fins de communication,
peut être opéré dans des cellules radio du réseau radio à ressources partagées (1)
et
peut être relié à au moins un terminal mobile (12, 12', 17) opéré dans le premier mode de fonctionnement,
les terminaux (12, 12', 3) étant en outre susceptibles d'être opérés, à des fins de communication, dans des cellules radio d'un réseau radio mobile (6) cellulaire public et d'être reliés les uns aux autres via le réseau radio mobile (6),
**caractérisé en ce que** l'utilisation d'une connexion de réseau radio mobile (9, 19, 19') se fait automatiquement, si une connexion (5, 16, 18, 18') via le réseau radio à ressources partagées (1) ne peut pas être établie et/ou est perturbée.

2. Système de communication mobile selon la revendication 1, **caractérisé en ce que** l'utilisation de la connexion de réseau radio mobile (9, 19, 19') se fait automatiquement, si une connexion (5, 16, 18, 18') à un terminal mobile (12, 12', 17) ne peut pas être établie et/ou est perturbée via le réseau radio à ressources partagées (1).

3. Système de communication mobile selon la revendication 2, **caractérisé en ce que** l'utilisation de la connexion de réseau radio mobile (9, 19, 19') se fait automatiquement, si le terminal mobile (12, 12', 17) n'est pas joignable ou la qualité de connexion est insuffisante dans le réseau radio à ressources partagées (1).

4. Système de communication mobile selon la revendication 2 ou la revendication 3, **caractérisé en ce que** le terminal mobile (12, 12', 17), au moins un terminal stationnaire (3) et/ou le réseau radio à ressources partagées (1) effectuent une opération de détermination de la joignabilité du terminal mobile (12, 12', 17) dans le réseau radio à ressources partagées (1) et/ou de la qualité de connexion dans le réseau radio à ressources partagées (1).

5. Système de communication mobile selon l'une des revendications 2 à 4, **caractérisé en ce que** le terminal mobile (12, 12', 17), au moins un terminal stationnaire (3) et/ou le réseau radio à ressources partagées (1) effectuent une opération de détermination d'une joignabilité rétablie du terminal mobile (3, 12, 12', 17) dans le réseau radio à ressources partagées (1) et/ou d'une qualité de connexion suffisante rétablie d'une connexion (5, 16, 18, 18') dans le réseau radio à ressources partagées (1).

6. Système de communication mobile selon la revendication 5, **caractérisé en ce que** si le terminal (3, 12, 12', 17) est joignable ou de nouveau joignable dans le réseau radio à ressources partagées (1) et/ou s'il y a une qualité de connexion suffisante ou de nouveau suffisante d'une connexion (5, 16, 18, 18') dans le réseau radio à ressources partagées (1), une connexion (5, 16, 18, 18') sera établie via le réseau radio à ressources partagées (1).

7. Système de communication mobile selon l'une des revendications 1 à 6, **caractérisé en ce que** la connexion de réseau radio mobile (9, 19, 19') est établie entre au moins un terminal mobile (12, 12') et au moins un terminal stationnaire (3).

8. Système de communication mobile selon l'une des revendications 1 à 7, **caractérisé en ce que** l'utilisation de la connexion de réseau radio mobile (9, 19, 19') peut être fixée.

9. Système de communication mobile selon la revendication 8, **caractérisé en ce que** l'utilisation de la connexion de réseau radio mobile (9, 19, 19') peut être fixée par le terminal mobile (12, 12').

10. Système de communication mobile selon la revendication 8 ou la revendication 9, **caractérisé en ce que** l'utilisation de la connexion de réseau radio mobile (9, 19, 19') peut être fixée par l'au moins un terminal stationnaire (3).

11. Système de communication mobile selon l'une des revendications 1 à 10, **caractérisé en ce que** la connexion de réseau radio mobile (9, 19, 19') est utilisée pour des connexions (5, 16) dans le premier mode de fonctionnement.

12. Système de communication mobile selon l'une des revendications 1 à 11, **caractérisé en ce qu'**au moins un terminal mobile (12, 12') peut être opéré simultanément dans le premier et le deuxième mode de fonctionnement.

13. Système de communication mobile selon la revendication 12, **caractérisé en ce qu'**un terminal mobile (12, 12') opéré simultanément dans le premier et le deuxième mode de fonctionnement peut être opéré en tant que station relais pour des terminaux (12', 17) opérés dans le deuxième mode de fonctionnement.

14. Système de communication mobile selon la revendication 13, **caractérisé en ce que** la connexion de réseau radio mobile (9, 19, 19') est utilisée pour des connexions (5, 16) dans le premier mode de fonctionnement pour le terminal mobile (12) qui peut être opéré en tant que station relais pour des terminaux (12', 17) opérés dans le deuxième mode de fonctionnement.

15. Système de communication mobile selon la revendication 13 ou la revendication 14, **caractérisé en ce qu'**au moins le terminal mobile (12) qui peut être opéré en tant que station relais pour des terminaux (12', 17) opérés dans le deuxième mode de fonctionnement peut être simultanément opéré dans le réseau radio à ressources partagées (1) et dans le réseau radio mobile (6).

16. Système de communication mobile selon l'une des revendications 1 à 15, **caractérisé en ce que** l'au moins un terminal stationnaire (3, 4, 8) est mis en place par un centre de contrôle décentralisé (3).

17. Système de communication mobile selon l'une des revendications 1 à 16, **caractérisé en ce que** le réseau radio à ressources partagées (1) et les terminaux (12, 12', 17, (3, 4, 8)) sont adaptés à permettre une communication en groupe entre les terminaux (12, 12', 17, (3, 4, 8)).

18. Terminal (3, 12, 12') pour des applications de communication, comprenant un dispositif émetteur/récepteur (4, 13, 13') qui peut être opéré dans un réseau radio numérique à ressources partagées (1) ayant une structure de réseau cellulaire composée de cellules radio, qui pour des applications de communication,
dans un premier mode de fonctionnement, permet une opération dans des cellules radio du réseau radio à ressources partagées (1) et/ou
dans un deuxième mode de fonctionnement permet une opération indépendamment des cellules radio du réseau radio à ressources partagées (1) en utilisant une connexion radio directe (18, 18'),
un dispositif de commande (14, 14'), qui
permet la commande des connexions de communication (5, 16, 18, 18') du dispositif émetteur/récepteur (4, 13, 13') dans le premier et/ou deuxième mode de fonctionnement,
et un dispositif émetteur/récepteur (8, 15, 15') qui peut être opéré dans des cellules radio d'un réseau radio mobile cellulaire publique (6) à des fins de communication et qui peut être commandé par le dispositif de commande (14, 14') pour commander une connexion de réseau radio mobile (9, 19, 19'), **caractérisé en ce que** le dispositif de commande (14, 14') détermine automatiquement l'utilisation de la connexion de réseau radio mobile (9, 19, 19'), si une connexion via le réseau radio à ressources partagées (1) ne peut pas être établie et/ou est perturbée.

19. Terminal (3, 12, 12') selon la revendication 18, **caractérisé en ce que** le dispositif de commande (14, 14') détermine automatiquement l'utilisation de la connexion de réseau radio mobile (9, 19, 19'), si le terminal (3, 12, 12') n'est pas joignable ou n'est joignable qu'avec une qualité de connexion insuffisante dans le réseau radio à ressources partagées (1).

20. Terminal (3, 12, 12') selon la revendication 18 ou la revendication 19, **caractérisé en ce que** le dispositif de commande (14, 14') est configuré pour déterminer la joignabilité du terminal (3, 12, 12') dans le réseau radio à ressources partagées (1).

21. Terminal (3, 12, 12') selon l'une des revendications 18 à 20, **caractérisé en ce que** le dispositif de commande (14, 14') est configuré pour déterminer la joignabilité du terminal (3, 12, 12') dans le réseau radio à ressources partagées (1) en vérifiant au moins un paramètre de fonctionnement du dispositif émetteur/récepteur (4, 13, 13') qui peut être opéré dans des cellules radio du réseau radio à ressources partagées (1).

22. Terminal (3, 12, 12') selon l'une des revendications 18 à 21, **caractérisé en ce que** les dispositifs émetteur/récepteur (4, 13, 13') peuvent être commandés par le dispositif de commande (14, 14') de sorte que si le terminal (3, 12, 12') est joignable dans le réseau radio à ressources partagées (1) et/ou si le terminal (3, 12, 12') est joignable dans le réseau radio à ressources partagées (1) avec une qualité de connexion suffisante, une connexion (5, 16) dans le réseau radio à ressources partagées (1) est établie via le dispositif émetteur/récepteur (4, 13, 13') qui peut être opéré dans des cellules radio du réseau radio à ressources partagées (1).

23. Terminal (3, 12, 12') selon l'une des revendications 18 à 22, **caractérisé en ce que** l'utilisation de la connexion de réseau radio mobile (9, 19, 19') peut être fixée par moyen du dispositif de commande (14, 14').

24. Terminal (3, 12, 12') selon l'une des revendications 18 à 23, **caractérisé en ce que** l'utilisation de la connexion de réseau radio mobile (9, 19, 19') peut être fixée par moyen du terminal (3, 12, 12').

25. Terminal (3, 12, 12') selon l'une des revendications 18 à 24, **caractérisé en ce que** l'utilisation de la connexion de réseau radio mobile (9, 19, 19') peut être fixée via le réseau radio mobile (6) par moyen d'un service de messages du réseau radio mobile (6).

26. Terminal (3, 12, 12') selon l'une des revendications 18 à 25, **caractérisé en ce que** le dispositif émetteur/récepteur (4, 13', 13) qui peut être opéré dans des cellules radio du réseau radio à ressources partagées (1) peut être commandé par le dispositif de commande (14, 14') de façon que le dispositif émetteur/récepteur puisse être opéré simultanément dans le premier et le deuxième mode de fonctionnement.

27. Terminal (3, 12, 12') selon la revendication 26, **caractérisé en ce que** le dispositif émetteur/récepteur qui peut être opéré dans des cellules radio du réseau radio à ressources partagées peut être commandé par le dispositif de commande de façon que le terminal puisse être opéré en tant que station relais pour des terminaux opérés dans le deuxième mode de fonctionnement.

28. Terminal (3, 12, 12') selon l'une des revendications 18 à 27, **caractérisé en ce que** les dispositifs émetteur/récepteur (4, 13, 13') peuvent être commandés par le dispositif de commande (14, 14') de façon qu'une utilisation de la connexion de réseau radio mobile (9, 19, 19') se fasse pour des connexions (5, 16) dans le premier mode de fonctionnement.

29. Terminal (3, 12, 12') selon l'une des revendications 18 à 28, **caractérisé en ce que** les dispositifs émetteur/récepteur (4, 8, 13, 13', 15, 15') peuvent être commandés par le dispositif de commande (14, 14') de façon que si le terminal est opéré en tant que station relais pour des terminaux (17) opérés dans le deuxième mode de fonctionnement, celui-ci puisse être opéré simultanément dans le réseau radio à ressources partagées (1) et dans le réseau radio mobile (6).

30. Terminal (3, 12, 12') selon l'une des revendications 18 à 29, **caractérisé en ce que** celui-ci est configuré pour être utilisé dans un système de communication mobile selon l'une des revendications 1 à 17.

31. Procédé pour établir des connexions de communication (5, 9, 16, 18, 18', 19, 19') entre des terminaux (3, 12, 12', 17) et un réseau radio à ressources partagées (1) et/ou un réseau radio mobile (6) d'un système de communication mobile, comprenant
un réseau radio numérique à ressources partagées (1) ayant une structure de réseau cellulaire composée de cellules radio,
au moins un terminal mobile (12, 12', 17), qui, à des fins de communication,
peut être opéré dans un premier mode de fonctionnement dans des cellules du réseau radio à ressources partagées (1) et/ou
dans un deuxième mode de fonctionnement indépendamment des cellules radio du réseau radio à ressources partagées (1) en utilisant une liaison radio directe,
dans lequel
des terminaux mobiles (12, 12') dans un premier et/ou deuxième mode de fonctionnement peuvent être reliés les uns aux autres,
et
au moins un terminal stationnaire (3), qui, à des fins de communication, peut être opéré dans des cellules radio du réseau radio à ressources partagées (1)
et
peut être relié à au moins un terminal mobile (12, 12', 17) opéré dans le premier mode de fonctionnement,
les terminaux (12, 12', 3) étant en outre susceptibles d'être opérés, à des fins de communication, dans des cellules radio d'un réseau radio mobile (6) cellulaire public et d'être reliés les uns aux autres via le réseau radio mobile (6),
**caractérisé en ce que**
l'utilisation d'une connexion de réseau radio mobile (9, 19, 19') se fait automatiquement pour une connexion de communication, si une connexion de communication (5, 16, 18, 18') via le réseau radio à ressources partagées (1) ne peut pas être établie et/ou est perturbée.

32. Procédé selon la revendication 31, **caractérisé par** l'utilisation d'un système de communication mobile selon l'une des revendications 1 à 17.

33. Procédé selon la revendication 31 ou la revendication 32, **caractérisé par** l'utilisation d'un terminal (3, 12, 12') selon l'une des revendications 18 à 30.
